# EUROPÄISCHE PATENTSCHRIFT

(11) **EP 3 658 801 B1**
(45) Veröffentlichungstag und Bekanntmachung des Hinweises auf die Patenterteilung: **14.05.2025**
(21) Anmeldenummer: 18732686.3
(22) Anmeldetag: 06.06.2018
(51) Int. Cl.: F16H 63/34

(54) **KOMBINATION AUS EINEM GETRIEBE UND EINER EINRICHTUNG ZUR BLOCKIERUNG DES GETRIEBES**
COMBINATION OF A TRANSMISSION WITH A DEVICE FOR BLOCKING THE TRANSMISSION
COMBINAISON D'UNE TRANSMISSION AVEC UN DISPOSITIF POUR BLOQUER LA TRANSMISSION

(30) Priorität: 26.07.2017 DE 102017212804
(43) Veröffentlichungstag der Anmeldung: 03.06.2020
(73) Patentinhaber: Robert Bosch GmbH, 70442 Stuttgart (DE)
(72) Erfinder: WETZEL, Gerhard, 70825 Korntal-Muenchingen (DE); KRAUTER, Lothar, 74321 Bietigheim-Bissingen (DE); KRASTEV, Ianislav, 71638 Ludwigsburg (DE); SCHLEINING, Igor, 70437 Stuttgart (DE); DREWE, Ingo, 77815 Buehl (DE); TAPIA ALVAREZ ICAZA, Francisco, 70374 Stuttgart (DE); GRABENBAUER, Richard, 95478 Kemnath (DE)
(86) Internationale Anmeldenummer: PCT/EP2018/064864
(87) Internationale Veröffentlichungsnummer: WO 2019/020252

(56) Entgegenhaltungen:
- DE-A1- 10 029 628
- DE-A1- 102005 051 266
- DE-A1- 102006 046 712
- DE-A1- 102007 062 349
- DE-A1- 102009 021 300
- DE-A1- 102015 214 339
- US-A1- 2012 216 638
- US-B1- 6 419 068

## Beschreibung

Die vorliegende Erfindung betrifft eine Kombination aus einem Getriebe und einer Einrichtung zur Blockierung des Getriebes, beispielsweise für ein Fahrzeuggetriebe oder ein Getriebe für einen Torantrieb.

### Stand der Technik

In Automatikgetrieben für Kraftfahrzeuge werden Einrichtungen zur Blockierung eines Getriebes als Parksperren eingesetzt, um ein ungewolltes Wegrollen von abgestellten Fahrzeugen zu verhindern. In der Regel werden dazu Sperrenräder mit Zahnlücken drehfest in den Antriebsstrang integriert, die mittels formschlüssig in die Zahnlücken eingreifenden betätigbaren Sperrklinken die Drehbewegung des Antriebs blockieren oder freigeben. Diese als Parksperren eingesetzten Einrichtungen zur Blockierung des Getriebes werden eingelegt, wenn der Wählhebel des Automatikgetriebes in die Stellung P gebracht wird. Das ist die Voraussetzung, dass bei stehendem Motor beispielsweise der Fahrzeugschlüssel im Zündschloss zum Abziehen freigegeben wird.

In der WO 2009/074389 wird eine Parksperrenanordnung vorgeschlagen, die durch ein drehfest und koaxial zur Antriebswelle angeordnetes Parksperrenrad das Getriebe blockiert.

Diese Einrichtung führt bei Elektroantrieben von Kraftfahrzeugen dazu, dass beim Einlegen der Parksperre durch das ruckartige Abbremsen der Antriebswelle große Momentenstöße auf den Rotor der elektrischen Antriebsmaschine ausgeübt werden. Diese Momentenstöße überschreiten die im üblichen Betrieb der elektrischen Antriebsmaschine auftretenden Momentenstöße und können zu Schäden an der elektrischen Antriebsmaschine und an dem Getriebe führen.

Bei Antrieben mit Verbrennungsmotoren tritt dieser Effekt nicht in Erscheinung, da der Verbrennungsmotor durch den hydraulischen Drehmomentenwandler von der Parksperre entkoppelt ist.

Bei elektrisch angetriebenen Fahrzeugen steht der Rotor der elektrischen Antriebsmaschine ständig im Eingriff mit dem Getriebe und ist daher beim Einlegen der Parksperre nicht vom Getriebe entkoppelt.

Es besteht daher der Bedarf nach einer robusten, funktionssicheren, bauraum- und kostengünstigen Einrichtung zur Blockierung von Getrieben, die Momentenstöße vermeidet.

Die DE 10 2015 214 339 A1 offenbart eine Antriebsanordnung mit einem in einem Gehäuse angeordneten Elektromotor und in dem Gehäuse angeordneten Getriebe. Das Getriebe umfasst eine Eingangsstufe, die mit einer Rotorwelle des Elektromotors verbunden ist, eine Laststufe die durch die Eingangsstufe angetrieben wird, und ein Differenzial, das durch die Laststufe angetrieben wird. Die Eingangsstufe ist als Planetengetriebe realisiert, wobei ein Sonnenrad an der als Hohlwelle realisierten Rotorwelle fixiert ist, ein Planetensatz an einem in Bezug auf das Gehäuse ortsfesten Steg gelagert ist und ein Hohlrad drehbar an dem Steg gelagert ist. Das Hohlrad ist über eine Verbindungswelle über ein Hauptradiallager am Steg gelagert und ein Parksperrenrad ist drehfest mit der Verbindungswelle verbunden, wobei das Hauptradiallager in einer Ebene mit den Zahnkronen des Parksperrenrads angeordnet ist, um ein Verkippen des Parksperrenrads auszuschließen.

Die US 2012/0216638 A1 beschreibt einen Antrieb mit einem Elektromotor und einem Getriebe, welches ein Parksperrenrad aufweist. Das Parksperrenrad ist dabei drehfest mit einer Abtriebswelle verbunden.

Die DE 10 2006 046 712 A1 offenbart ein Getriebe mit einem Parksperrenrad, wobei eine Außenverzahnung des Parksprrenrads an einer Lamellenträgerscheibe ausgebildet ist, welche drehfest mit einer Antriebswelle des Getriebes verbunden ist.

Die DE 10 2009 021 300 A1 offenbart eine Parksperre, wobei Bolzen durch einen Mechanismus in axialer Richtung in Löcher eines Stirnrads einführbar sind. Aus der DE 10 2007 062 349 A1 ist ein Getriebe mit einer Einrichtung zur Blockierung des Getriebes bekannt, die ein Sperrenrad mit biegeweichen Speichen umfasst.

### Offenbarung der Erfindung

Die erfindungsgemäße Vorrichtung mit dem Kennzeichen des Anspruchs 1 hat den Vorteil, dass eine Kombination aus einem Getriebe und einer Einrichtung zur Blockierung des Getriebes geschaffen wird, die Momentenstöße vermeidet und robust, funktionssicher, bauraum- und kostengünstig ist.

Die Erfindung betrifft eine Kombination aus einem Getriebe und einer Einrichtung zur Blockierung des Getriebes mit mindestens einer Welle und mindestens einem auf der Welle koaxial angeordneten Sperrenrad, wobei das koaxial auf der Welle angeordnete Sperrenrad mit einer drehweichen Verbindung mit der Welle des zu blockierenden Getriebes in Verbindung steht. Erfindungsgemäß ist vorgesehen, dass die drehweiche Verbindung zwischen Sperrenrad und Welle eine Hohlwelle ist, wobei entweder die Welle eine Antriebswelle des Getriebes ist und das Sperrenrad mit der drehweichen Hohlwelle koaxial auf der Antriebswelle des Getriebes angeordnet ist und die Hohlwelle drehfest mit einem auf der Antriebswelle des Getriebes angeordneten Antriebsritzel einer ersten Stirnradstufe verbunden ist, oder die Welle eine Zwischenwelle des Getriebes ist und das Sperrenrad mit der drehweichen Hohlwelle koaxial auf der Zwischenwelle des Getriebes angeordnet ist und die Hohlwelle drehfest mit einem auf der Zwischenwelle des Getriebes angeordneten Stirnrad einer ersten Stirnradstufe des Getriebes verbunden ist.

Die drehweiche Verbindung hat den Vorteil, dass beim Einlegen der Blockierung des Getriebes auftretende Momentenstöße durch die drehweiche Verbindung elastisch abgefedert werden und somit Beschädigungen an Komponenten des Antriebs durch Momentenstöße, die über denen des üblichen Betriebs liegen, vermieden werden. Insbesondere bei den ständig in Eingriff stehenden elektrischen Antrieben werden durch die drehweiche Verbindung des Sperrenrades Schäden an der elektrischen Antriebsmaschine verhindert.

Vorteilhafterweise wird für die Einrichtung zur Blockierung eines Getriebes eine Hohlwelle zwischen dem Sperrenrad und einer Welle des Getriebes eingesetzt. Durch die geometrische Gestaltung der Hohlwelle mit Durchmesser, Länge und Wandstärke und die Stoffauswahl ist es sehr einfach möglich, die geforderten mechanischen Eigenschaften der Hohlwelle festzulegen.

Besonders vorteilhaft ist in einer ersten Ausführungsform der Erfindung die Verbindung der Einrichtung zur Blockierung eines Getriebes durch die drehfeste Verbindung der Hohlwelle mit einem auf einer Antriebswelle des Antriebs angeordneten Antriebsritzel einer ersten Stirnradstufe. An dem Antriebsritzel des Antriebs wirken die kleinsten Drehmomente, daher ist die Hohlwelle und das Sperrenrad in vorteilhafter Weise auch nur auf diese Drehmomente auszulegen. Vorteilhaft ist durch die drehfeste Verbindung mit dem Antriebsritzel keine zusätzliche Welle-Nabenverbindung zwischen Hohlwelle und Antriebswelle erforderlich.

In einer zweiten Ausführungsform der Erfindung wird das Sperrenrad mit der drehweichen Hohlwelle koaxial auf einer Zwischenwelle des Getriebes angeordnet. Diese Anordnung ermöglicht die bauraumsparende Integration des Parksperrenrades in das Getriebe und ist sehr kostengünstig, da eine beliebige bereits vorhandene Welle mit ihren Lagerungen verwendet wird.

Besonders vorteilhaft ist die Verbindung der Einrichtung zur Blockierung eines Getriebes durch die drehfeste Verbindung der Hohlwelle mit einem auf einer Zwischenwelle des Antriebs angeordneten Stirnrad. Das Stirnrad ist mit anderen Stirnrädern des Getriebes ständig wirkverbunden, daher ist die Hohlwelle über dieses Stirnrad ebenfalls ständig mit dem Getriebe wirkverbunden. Vorteilhaft ist durch die drehfeste Verbindung mit dem Stirnrad keine zusätzliche Welle-Nabenverbindung zwischen Hohlwelle und Getriebewelle erforderlich.

Durch die in den abhängigen Ansprüchen genannten Maßnahmen sind vorteilhafte Weiterbildungen der in dem unabhängigen Anspruch angegebenen Vorrichtung möglich.

In vorteilhafter Weise ist die Hohlwelle der Einrichtung zur Blockierung eines Getriebes drehweich auf der Antriebswelle gelagert. Durch diese als Gleitlager oder Wälzlager ausgebildete Lagerstelle wird in vorteilhafter Weise vermieden, dass die Sperrkräfte des Sperrenrades zu Biegebeanspruchungen und damit zu einer plastischen Verformung der Hohlwelle führen. Damit ist eine Unwucht aufgrund einer verformten Hohlwelle ausgeschlossen. Vorteilhaft ist die Auslegung dieser Lagerstelle als Spielpassung, da sich Antriebswelle und Hohlwelle mit gleicher Drehzahl drehen. Die eventuell auftretende Durchbiegung der Hohlwelle wird über die Spielpassung abgestützt, wobei eine Durchbiegung der Hohlwelle zur Anlage der Hohlwelle an die Antriebswelle führt. Durch die Auslegung der Spielpassung zwischen Hohlwelle und Antriebswelle wird die größtmögliche Durchbiegung der Hohlwelle im elastischen Bereich begrenzt. Andererseits ermöglicht die Spielpassung eine Verdrehung der Hohlwelle beim Einlegen der Blockierung des Getriebes, da keine Momente übertragen werden. Durch die Verwendung einer Spielpassung als Lager kann die Hohlwelle bei der Montage einfach ohne Kraftaufwand auf die Antriebswelle aufgeschoben werden.

In vorteilhafter Weise ist die Hohlwelle der Einrichtung zur Blockierung eines Getriebes drehweich auf der Zwischenwelle gelagert. Durch diese als Gleitlager oder Wälzlager ausgebildete Lagerstelle wird in vorteilhafter Weise vermieden, dass die erhöhten Sperrkräfte des Sperrenrades bei einer Anordnung auf einer Zwischenwelle zu Biegebeanspruchungen und damit zu einer plastischen Verformung der Hohlwelle führen. Damit ist eine Unwucht aufgrund einer verformten Hohlwelle ausgeschlossen. Vorteilhaft ist die Auslegung dieser Lagerstelle als Spielpassung, da sich die Zwischenwelle und Hohlwelle mit gleicher Drehzahl drehen. Die eventuell auftretende Durchbiegung der Hohlwelle wird über die Spielpassung abgestützt, wobei eine Durchbiegung der Hohlwelle zur Anlage der Hohlwelle an die Zwischenwelle führt. Durch die Auslegung der Spielpassung zwischen Hohlwelle und Zwischenwelle wird die größtmögliche Durchbiegung der Hohlwelle im elastischen Bereich begrenzt. Andererseits ermöglicht die Spielpassung eine Verdrehung der Hohlwelle beim Einlegen der Blockierung des Getriebes, da keine Momente übertragen werden. Durch die Verwendung einer Spielpassung als Lager kann die Hohlwelle bei der Montage einfach ohne Kraftaufwand auf die Zwischenwelle aufgeschoben werden.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.

### Kurze Beschreibung der Zeichnungen

Es zeigen:
Fig. 1: eine schematische Darstellung eines Schnitts durch einen Antrieb mit einer erfindungsgemäßen Kombination aus einem Getriebe mit einer drehweichen Einrichtung zur Blockierung des Getriebes mit einem auf einer Hohlwelle angeordneten Sperrenrad;
Fig. 2: eine schematische Schnittzeichnung durch einen Antrieb mit einer erfindungsgemäßen Kombination aus einem Getriebe mit einer drehweichen Einrichtung zur Blockierung des Getriebes mit einem auf einer Hohlwelle angeordneten Sperrenrad;
Fig. 3: eine schematische Darstellung einer nicht von der Erfindung umfassten, zum Rotor getriebeseitig benachbarten Anordnung eines Sperrenrades in einer elektrisch angetriebenen Achse;
Fig. 4: eine schematische Darstellung einer nicht von der Erfindung umfassten, zum Rotor rotorseitig benachbarten Anordnung eines Sperrenrades in einer elektrisch angetriebenen Achse;
Fig. 5: eine schematische Darstellung einer nicht von der Erfindung umfassten, getriebeseitigen fliegenden Anordnung eines Sperrenrades auf der Antriebswelle in einer elektrisch angetriebenen Achse;
Fig. 6: eine schematische Darstellung einer nicht von der Erfindung umfassten, rotorseitigen fliegenden Anordnung eines Sperrenrades auf der Antriebswelle in einer elektrisch angetriebenen Achse;
Fig. 7: eine schematische Darstellung einer nicht von der Erfindung umfassten, fliegenden Anordnung eines Sperrenrades auf einer Zwischenwelle in einer elektrisch angetriebenen Achse;
Fig. 8: eine schematische Darstellung einer nicht von der Erfindung umfassten Anordnung eines Sperrenrades auf einer Zwischenwelle benachbart zu einem Stirnrad in einer elektrisch angetriebenen Achse;
Fig. 9: eine schematische Darstellung einer erfindungsgemäßen Anordnung eines über eine Hohlwelle zu einem Stirnrad verbundenen Sperrenrad auf einer Zwischenwelle einer elektrisch angetriebenen Achse;
Fig. 10: eine schematische Darstellung einer nicht von der Erfindung umfassten Anordnung eines Sperrenrades auf einer eigenen Welle, drehfest mit einer Zwischenwelle eines Getriebes einer elektrisch angetriebenen Achse verbunden;
Fig. 11: eine schematische Darstellung einer nicht von der Erfindung umfassten Anordnung eines Sperrenrades auf einer eigenen Welle, getriebeseitig drehfest mit der Antriebswelle einer elektrisch angetriebenen Achse verbunden;
Fig. 12: eine schematische Darstellung einer nicht von der Erfindung umfassten Anordnung eines Sperrenrades auf einer eigenen Welle, rotorseitig drehfest mit der Antriebswelle einer elektrisch angetriebenen Achse verbunden,
Fig. 13: eine schematische Darstellung einer nicht von der Erfindung umfassten Anordnung eines Sperrenrades auf einer eigenen Welle, drehfest mit einem in das Getriebe eingreifenden Stirnrad verbunden.

Insbesondere Abstände und Größenrelationen sind in den Figuren nicht maßstabsgetreu wiedergegeben. In den verschiedenen Figuren sind sich entsprechende Elemente mit den gleichen Referenznummern versehen.

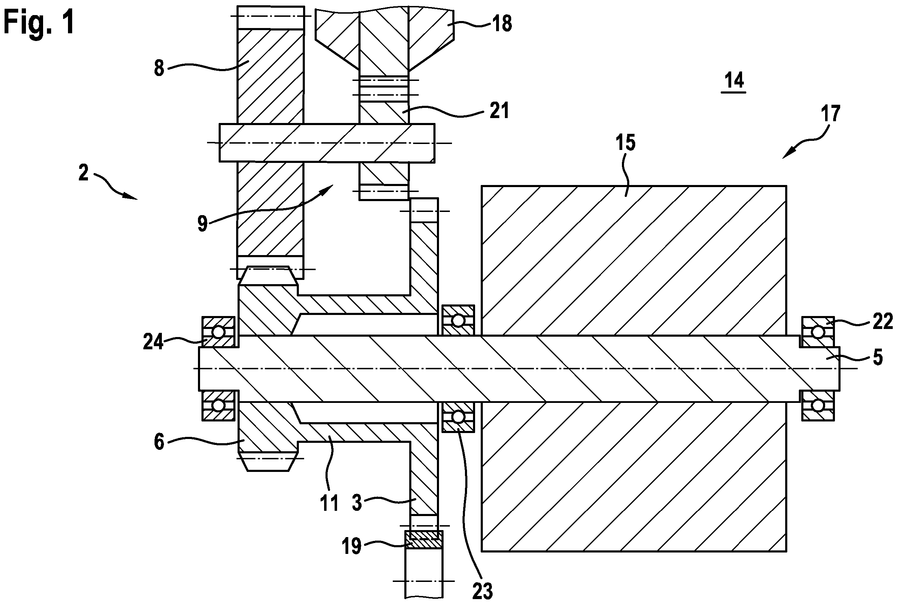

Figur 1 zeigt eine schematische Darstellung eines Schnitts durch eine aus einem Elektromotor 17 und einem Getriebe 2 bestehenden Antriebseinheit 14. Der Elektromotor 17 ist mit seinem Rotor 15 und der Antriebswelle 5 dargestellt. Der Elektromotor 17 treibt über das auf seiner Antriebswelle 5 angeordnete Antriebsritzel 6 das wirkverbundene Stirnrad 8 einer Stirnradstufe 9 an. Der Abtrieb 21 der Stirnradstufe 9 treibt das wirkverbundene Ausgleichsgetriebe 18 an. Über das Ausgleichsgetriebe 18 werden bei Mehrspurfahrzeugen die unterschiedlichen Laufwege der innen und außen laufenden Räder ausgeglichen. Mit dem Antriebsritzel 6 ist die koaxial zur Antriebswelle 5 angeordnete Hohlwelle 11 drehfest verbunden, über welche das Sperrenrad 3 mit dem Antriebsritzel 6 drehweich verbunden ist. Über die Sperrklinke mit Sperrelement 19 wird das Getriebe 2 bei Bedarf blockiert. Die Antriebswelle 5 wird über die Wälzlager 22, 23 und 24 gelagert, wobei mindestens eines der Wälzlager 22, 23 und 24 als Festlager zur Aufnahme der Längskräfte der Antriebswelle 5 ausgelegt ist.

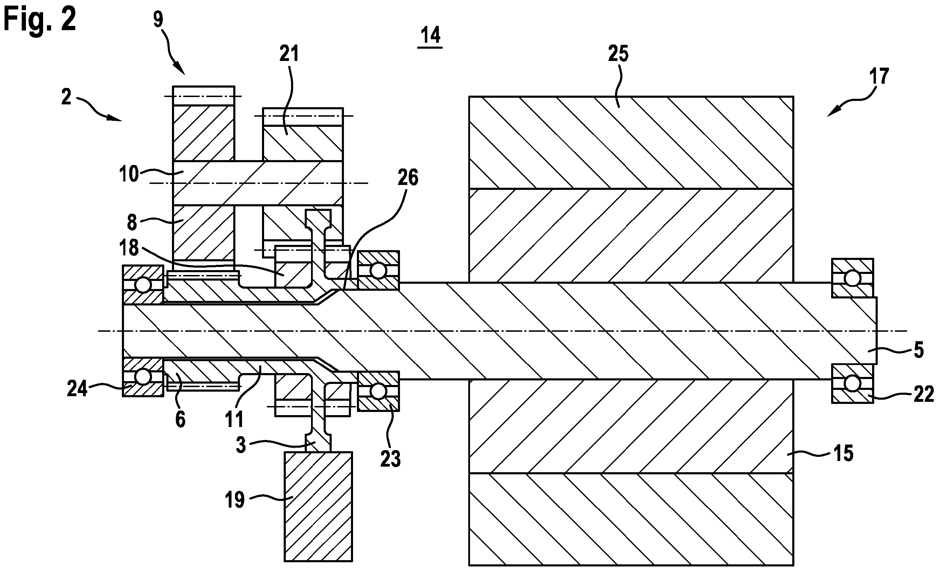

Figur 2 zeigt eine schematische Schnittzeichnung durch eine Antriebseinheit 14 eines elektrischen Achsantriebs. Diese Antriebseinheit 14 besteht aus einem Elektromotor 17 und einem Getriebe 2. Der Elektromotor 17 ist mit seinem Stator 25 und seinem Rotor 15 und der Antriebswelle 5 dargestellt. Auf der Antriebswelle 5 ist das Antriebsritzel 6 mit einer drehfesten Verbindung angeordnet. Dazu kann eine Nut-Feder-Verbindung, eine Keilwellenverbindung oder eine andere geeignete formschlüssige Welle-Naben-Verbindung eingesetzt werden. Das Antriebsritzel 6 treibt das auf einer Zwischenwelle 10 angeordnete und mit dem Antriebsritzel 6 wirkverbundene Eingangsstirnrad 8 der Zwischenstufe 9 an. Das Eingangsstirnrad 8 ist drehfest über eine Nut-Feder-Verbindung oder eine Keilwellenverbindung oder eine andere geeignete formschlüssige Welle-Naben-Verbindung mit der Zwischenwelle 10 der Zwischenstufe 9 verbunden. Auf der Zwischenwelle 10 ist ebenfalls drehfest das Ausgangsstirnrad 21 der Zwischenstufe 9 angeordnet. Dazu kann eine Nut-Feder-Verbindung, eine Keilwellenverbindung oder eine andere geeignete formschlüssige Welle-Naben-Verbindung eingesetzt werden. An Stelle der formschlüssigen Verbindungen können jeweils auch stoffschlüssige Verbindungen gewählt werden. Beispielsweise kann die Zwischenwelle 10 mit dem Eingangsstirnrad 8 und dem Ausgangsstirnrad 21 aus einem einstückigen Rohteil hergestellt werden. Ebenfalls kann ein aus der Zwischenwelle 10 mit dem Eingangsstirnrad 8 und dem Ausgangsstirnrad 21 bestehendes Teil durch Verschweißen von zwei oder mehreren Rohteilen erzeugt werden. Das Ausgangsstirnrad 21 treibt das wirkverbundene Ausgleichsgetriebe 18 an. Mit dem Antriebsritzel 6 ist die koaxial zur Antriebswelle 5 angeordnete Hohlwelle 11 drehfest verbunden, über welche das Sperrenrad 3 mit dem Antriebsritzel 6 drehweich verbunden ist. Über die Sperrklinke mit Sperrelement 19 wird das Getriebe 2 bei Bedarf blockiert. Die Antriebswelle 5 wird über die Wälzlager 22, 23 und 24 gelagert, wobei mindestens eines der Wälzlager 22, 23 und 24 als sogenanntes Festlager zur Aufnahme der Längskräfte der Antriebswelle 5 ausgelegt ist. Zur drehweichen Lagerung der Hohlwelle 11 und des Sperrenrades 3 auf der Antriebswelle 5 ist die Lagerstelle 26 vorgesehen. Durch diese Lagerstelle 26 wird in vorteilhafter Weise vermieden, dass die Sperrkräfte des Sperrenrades 3 über Biegebeanspruchungen zu einer unzulässigen Verformung der Hohlwelle 11 führen. Damit ist eine Unwucht aufgrund einer schadhaft verformten Hohlwelle 11 ausgeschlossen. Vorteilhaft ist die Auslegung dieser Lagerstelle 26 als Spielpassung, da sich Antriebswelle 5 und Hohlwelle 11 mit gleicher Drehzahl drehen. Die eventuell auftretende elastische Durchbiegung der Hohlwelle 11 wird über die Spielpassung abgestützt, wobei eine Durchbiegung der Hohlwelle 11 zur Anlage der Hohlwelle 11 an die Antriebswelle 5 führt. Durch die Auslegung der Spielpassung zwischen Hohlwelle 11 und Antriebswelle 5 wird die größtmögliche Durchbiegung der Hohlwelle 11 begrenzt. Andererseits ermöglicht die Spielpassung eine Verdrehung der Hohlwelle 11 beim Einlegen der Sperrklinke mit dem Sperrelement 19 des Getriebes, da über die Lagerstelle 26 keine Momente übertragen werden. Durch die Verwendung einer Spielpassung als Lagerstelle 26 kann die Hohlwelle 11 bei der Montage einfach ohne Kraftaufwand auf die Antriebswelle 5 aufgeschoben werden.

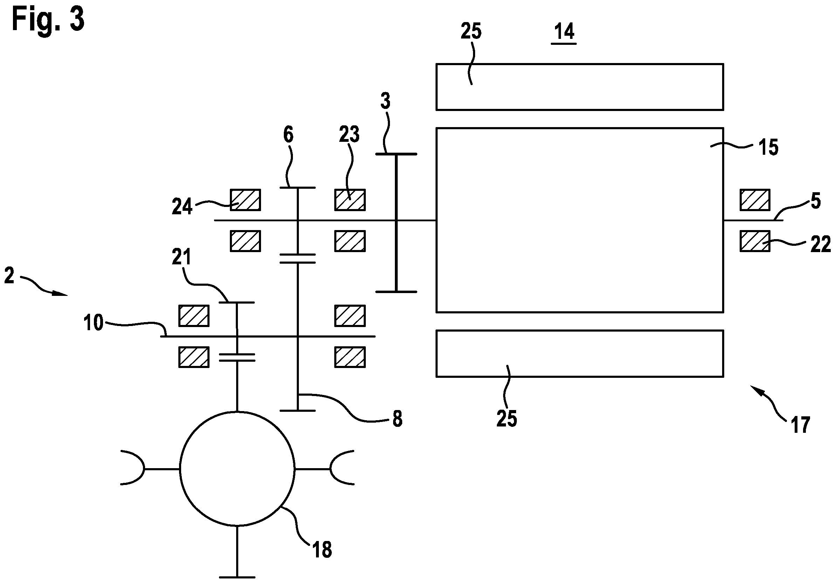

Figur 3 zeigt eine schematische Darstellung einer zum Rotor 15 getriebeseitig benachbarten Anordnung eines Sperrenrades 3 auf der Antriebswelle 5 in einer Antriebseinheit einer elektrisch angetriebenen Achse 14. In dieser besonders bauraumsparenden Ausführung bietet sich die Verwendung eines Sperrenrades 3 mit elastischen Speichen zur drehweichen Blockierung des Getriebes 2 an. Die gesamte Antriebseinheit besteht aus einem Elektromotor 17 und einem Getriebe 2. Der Elektromotor 17 ist mit seinem Stator 25 und seinem Rotor 15 und der Antriebswelle 5 dargestellt. Auf der Antriebswelle 5 ist das Antriebsritzel 6 mit einer drehfesten Verbindung angeordnet. Die Antriebswelle wird über die Wälzlager 22, 23 und 24 gelagert. Das Getriebe 2 ist als zweistufiges Stirnradgetriebe dargestellt. Das Antriebsritzel 6 ist mit dem Eingangsstirnrad 8 wirkverbunden. Das auf der Zwischenwelle 10 drehfest angeordnete Eingangsstirnrad 8 treibt über die Zwischenwelle 10 das drehfest auf der Zwischenwelle 10 angeordnete Ausgangsstirnrad 21 an. Dieses Ausgangsstirnrad 21 ist mit dem Ausgleichsgetriebe 18 wirkverbunden.

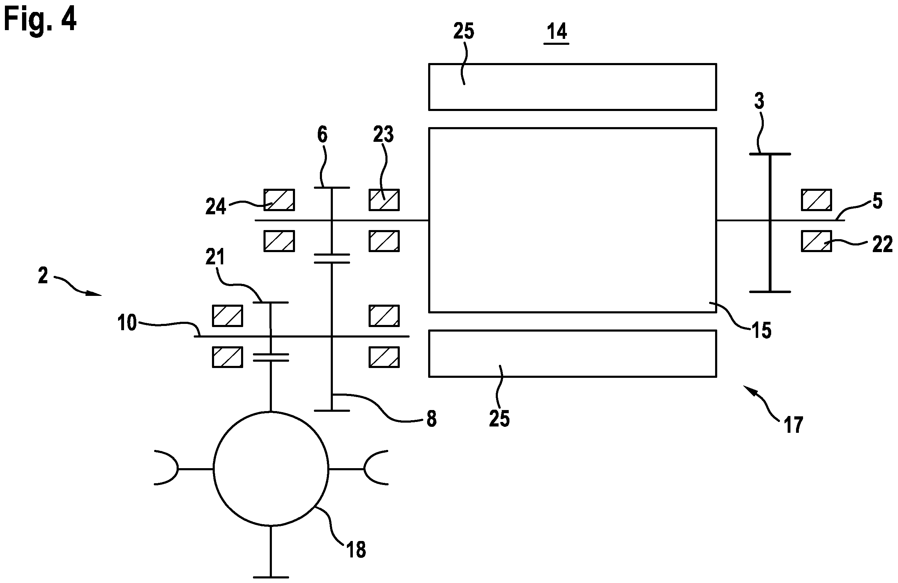

Figur 4 zeigt eine schematische Darstellung einer zum Rotor 15 rotorseitig benachbarten Anordnung eines Sperrenrades 3 auf der Antriebswelle 5 einer Antriebseinheit einer elektrisch angetriebenen Achse 14. In dieser ebenfalls besonders bauraumsparenden Ausführung bietet sich wie in Figur 3 ebenfalls die Verwendung eines Sperrenrades 3 mit elastischen Speichen zur drehweichen Blockierung des Getriebes 2 an. Bei dieser Anordnung kann das Sperrenrad 3 zusammen mit der Sperrklinke 19 mit dem Sperrelement in den Elektromotor 17 integriert werden. Diese Anordnung ist neben der Verwendung in integrierten Antriebseinheiten 14 zur Verwendung in Antrieben mit separatem Elektromotor 17 und Getriebe 2 geeignet.

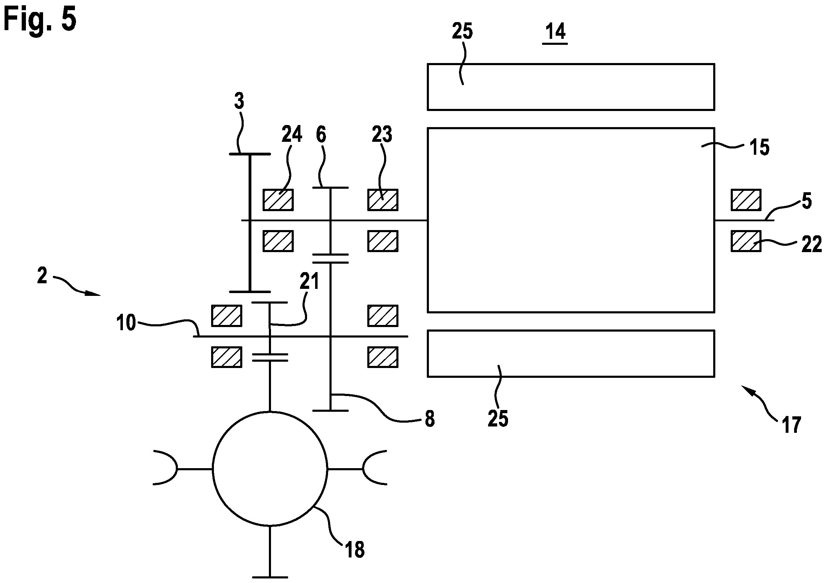

Figur 5 zeigt eine schematische Darstellung einer getriebeseitigen fliegenden Anordnung eines Sperrenrades 3 auf der Antriebswelle 5 einer Antriebseinheit einer elektrisch angetriebenen Achse 14. In dieser Ausführung bietet sich wie in den Figuren 3 und 4 ebenfalls die Verwendung eines Sperrenrades 3 mit elastischen Speichen zur drehweichen Blockierung des Getriebes 2 an. Bei dieser Anordnung kann das Sperrenrad 3 zusammen mit der Sperrklinke 19 mit dem Sperrelement in das Getriebe 2 integriert werden. Diese Anordnung ist neben der Verwendung in integrierten Antriebseinheiten 14 zur Verwendung in Antrieben mit separatem Elektromotor 17 und Getriebe 2 geeignet.

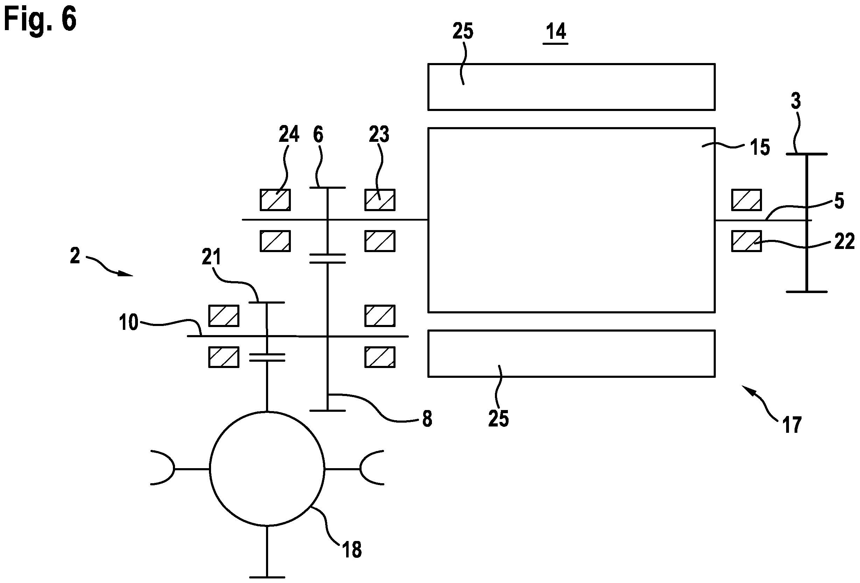

Figur 6 zeigt eine schematische Darstellung einer rotorseitigen fliegenden Anordnung eines Sperrenrades 3 auf der Antriebswelle 5 einer Antriebseinheit einer elektrisch angetriebenen Achse 14. In dieser Ausführung bietet sich wie in den Figuren 3, 4 und 5 ebenfalls die Verwendung eines Sperrenrades 3 mit elastischen Speichen zur drehweichen Blockierung des Getriebes 2 an. Bei dieser Anordnung kann das Sperrenrad 3 zusammen mit der Sperrklinke 19 mit dem Sperrelement an den Elektromotor 17 angebaut werden. Diese Anordnung ist neben der Verwendung in integrierten Antriebseinheiten 14 zur Verwendung in Antrieben mit separatem Elektromotor 17 und Getriebe 2 geeignet.

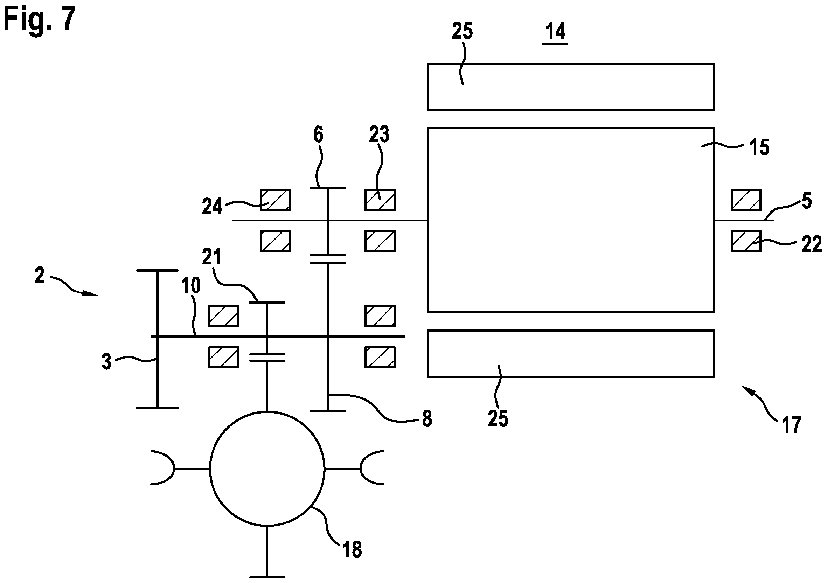

Figur 7 zeigt eine schematische Darstellung einer fliegenden Anordnung eines Sperrenrades 3 auf einer Zwischenwelle 10 einer Antriebseinheit einer elektrisch angetriebenen Achse 14. In dieser Ausführung bietet sich die Verwendung eines Sperrenrades 3 mit elastischen Speichen zur drehweichen Blockierung des Getriebes 2 an. Hierbei sind die Nabe des Sperrenrades 3, das Eingangsstirnrad 8 und das Ausgangsstirnrad 21 drehfest mit der Zwischenwelle 10 verbunden. Bei dieser Anordnung kann das Sperrenrad 3 zusammen mit der Sperrklinke 19 mit dem Sperrelement an das Getriebe 2 angebaut werden. Diese Anordnung ist neben der Verwendung in integrierten Antriebseinheiten 14 zur Verwendung in Antrieben mit separatem Elektromotor 17 und Getriebe 2 geeignet.

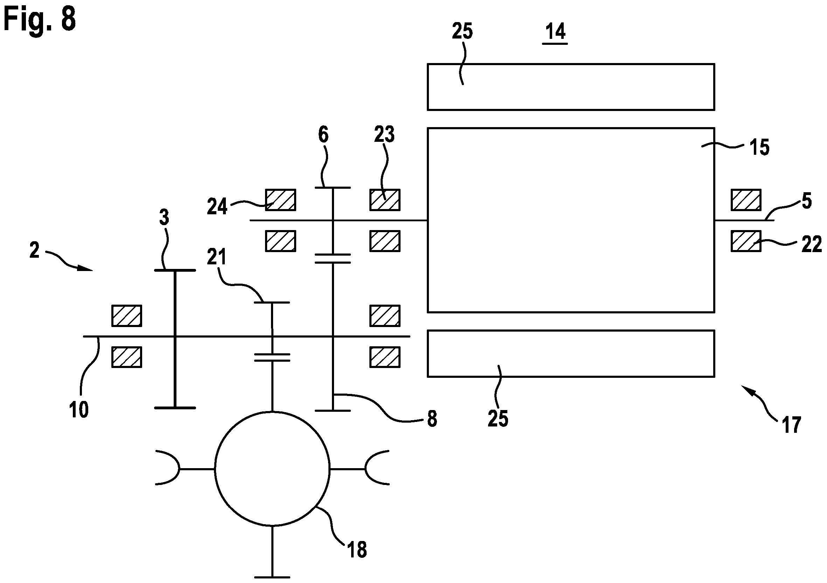

Figur 8 zeigt eine schematische Darstellung einer integrierten Anordnung eines Sperrenrades 3 auf einer Zwischenwelle 10 einer Antriebseinheit einer elektrisch angetriebenen Achse 14. In dieser Ausführung bietet sich die Verwendung eines Sperrenrades 3 mit elastischen Speichen zur drehweichen Blockierung des Getriebes 2 an. Hierbei sind die Nabe des Sperrenrades 3, das Eingangsstirnrad 8 und das Ausgangsstirnrad 21 drehfest mit der Zwischenwelle 10 verbunden. Bei dieser Anordnung kann das Sperrenrad 3 zusammen mit der Sperrklinke 19 mit dem Sperrelement in das Getriebe 2 integriert werden. Diese Anordnung ist neben der Verwendung in integrierten Antriebseinheiten 14 zur Verwendung in Antrieben mit separatem Elektromotor 17 und Getriebe 2 geeignet.

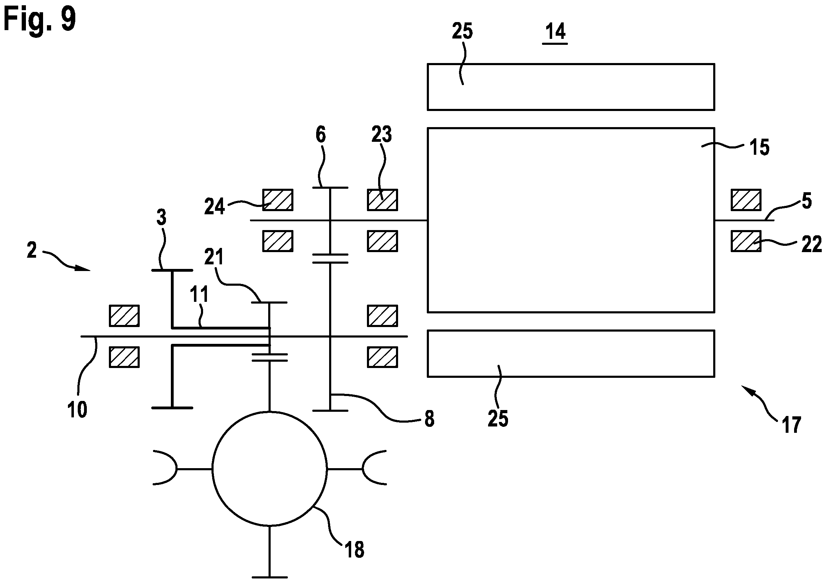

Figur 9 zeigt eine schematische Darstellung einer integrierten Anordnung eines Sperrenrades 3 mit einer Hohlwelle 11 auf einer Zwischenwelle 10 einer Antriebseinheit einer elektrisch angetriebenen Achse 14. Die Hohlwelle 11 zur drehweichen Blockierung des Getriebes 2 ist drehfest mit dem Ausgangsstirnrad 21 verbunden, welches seinerseits drehfest mit der Zwischenwelle 10 verbunden ist. Das Eingangsstirnrad 8 ist ebenfalls drehfest mit der Zwischenwelle 10 verbunden. Bei dieser Anordnung kann das Sperrenrad 3 zusammen mit der Sperrklinke 19 mit dem Sperrelement in das Getriebe 2 integriert werden. Diese Anordnung ist neben der Verwendung in integrierten Antriebseinheiten 14 zur Verwendung in Antrieben mit separatem Elektromotor 17 und Getriebe 2 geeignet.

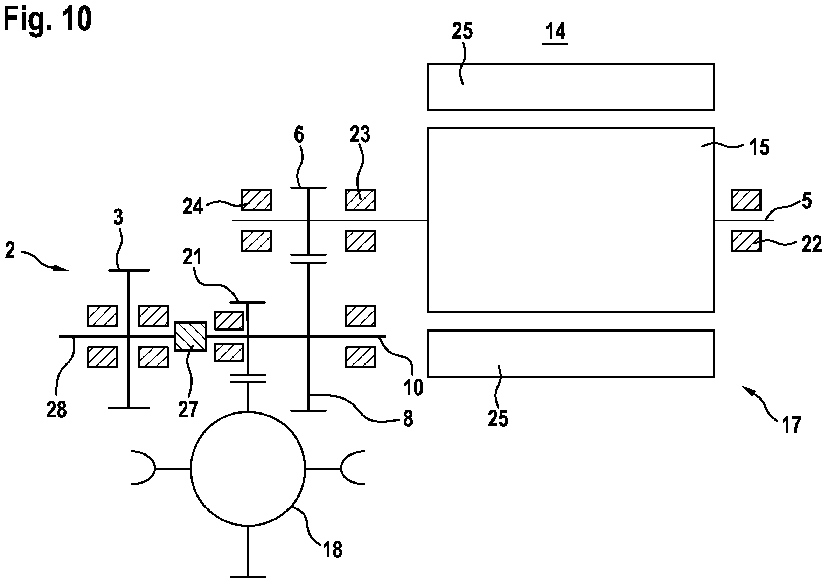

Figur 10 zeigt eine schematische Darstellung einer drehfesten Anordnung eines Sperrenrades 3 auf einer eigenen Welle, die drehfest mit einer Zwischenwelle 10 eines Getriebes 2 einer Antriebseinheit einer elektrisch angetriebenen Achse 14 verbunden ist. Die drehfeste Kupplung 27 verbindet einen Stummel der Zwischenwelle 10 mit einer Lagerwelle 28, auf der das Sperrenrad 3 angeordnet ist. Bei dieser Anordnung kann das Sperrenrad 3 zusammen mit der Sperrklinke 19 mit dem Sperrelement an das Getriebe 2 angebaut werden. In dieser Ausführung bietet sich die Verwendung eines Sperrenrades 3 mit elastischen Speichen zur drehweichen Blockierung des Getriebes 2 an.

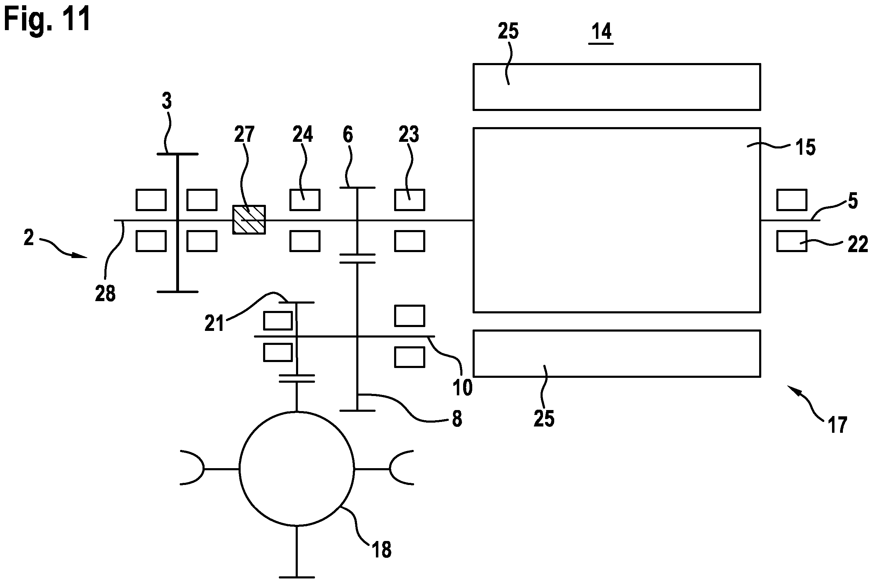

Figur 11 zeigt eine schematische Darstellung einer drehfesten Anordnung eines Sperrenrades 3 auf einer eigenen Welle, das auf der Seite des Getriebes 2 drehfest mit der Antriebswelle 5 einer Antriebseinheit einer elektrisch angetriebenen Achse 14 verbunden ist. Die drehfeste Kupplung 27 verbindet einen getriebeseitigen Stummel der Antriebswelle 5 mit einer Lagerwelle 28, auf der das Sperrenrad 3 angeordnet ist. Bei dieser Anordnung kann das Sperrenrad 3 zusammen mit der Sperrklinke 19 mit dem Sperrelement an das Getriebe 2 angebaut werden. In dieser Ausführung bietet sich die Verwendung eines Sperrenrades 3 mit elastischen Speichen zur drehweichen Blockierung des Getriebes 2 an.

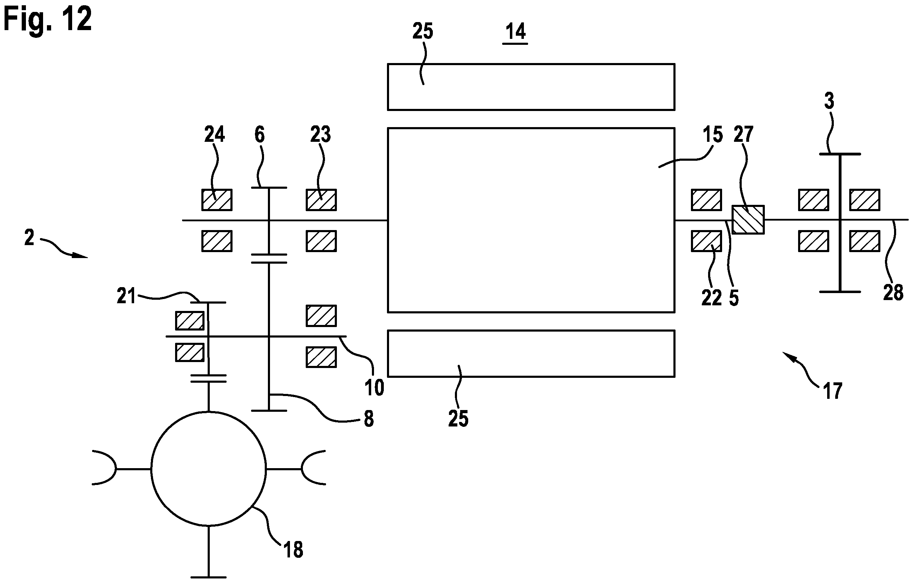

Figur 12 zeigt eine schematische Darstellung einer drehfesten Anordnung eines Sperrenrades 3 auf einer eigenen Welle, das auf der Seite des Elektromotors 17 drehfest mit der Antriebswelle 5 einer Antriebseinheit einer elektrisch angetriebenen Achse 14 verbunden ist. Die drehfeste Kupplung 27 verbindet einen rotorseitigen Stummel der Antriebswelle 5 mit einer Lagerwelle 28, auf der das Sperrenrad 3 angeordnet ist. Bei dieser Anordnung kann das Sperrenrad 3 zusammen mit der Sperrklinke 19 mit dem Sperrelement an den Elektromotor 17 angebaut werden. In dieser Ausführung bietet sich die Verwendung eines Sperrenrades 3 mit elastischen Speichen zur drehweichen Blockierung des Getriebes 2 an.

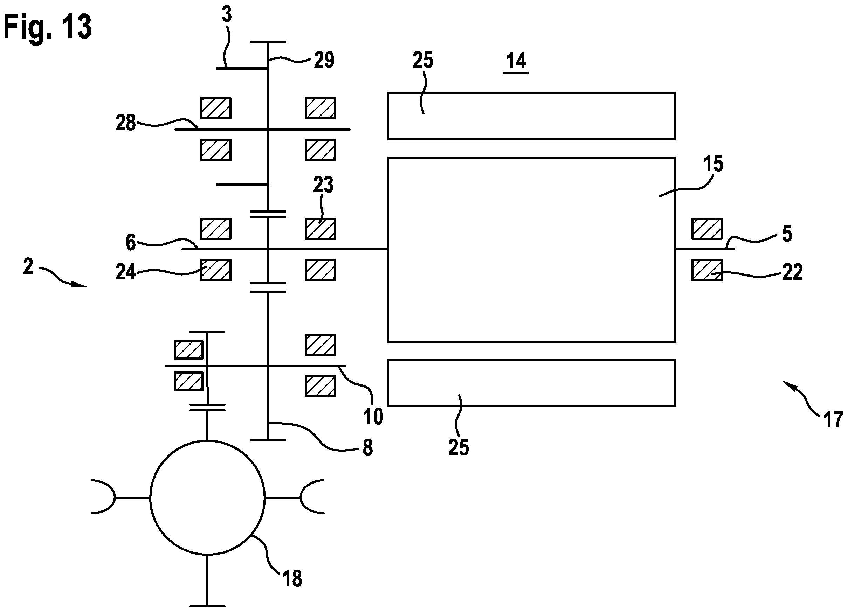

Figur 13 zeigt eine schematische Darstellung eines Sperrenrades 3 auf einer eigenen Lagerwelle 28, welches mit einem Sperrenstirnrad 29 drehfest verbunden ist. Dieses Sperrenstirnrad 29 ist mit dem Antriebsritzel 6 wirkverbunden. In dieser Ausführung bildet das Sperrenrad 3 zusammen mit der Lagerwelle 28 und der nicht dargestellten Sperrklinke mit Sperrelement 19 eine Einheit. Diese Einheit kann als separate Einheit in ein Getriebe 2 montiert werden. In dieser Ausführung bietet sich die Verwendung eines Sperrenrades 3 mit elastischen Speichen zur drehweichen Blockierung des Getriebes 2 an. Die Nabe des Sperrenrades 3 mit elastischen Speichen ist mit dem Sperrenstirnrad 29 drehfest verbunden, somit ist eine drehweiche Blockierung des Getriebes 2 gegeben.

## Patentansprüche

1. Kombination aus einem Getriebe (2) und einer Einrichtung zur Blockierung des Getriebes (2) mit mindestens einer Welle und mindestens einem auf der Welle koaxial angeordneten Sperrenrad (3), wobei das koaxial auf der Welle angeordnete Sperrenrad (3) mit einer drehweichen Verbindung (4) mit der Welle des zu blockierenden Getriebes (2) in Verbindung steht, **dadurch gekennzeichnet, dass** die drehweiche Verbindung (4) zwischen Sperrenrad (3) und Welle eine Hohlwelle (11) ist, wobei entweder
- die Welle eine Antriebswelle (5) des Getriebes (2) ist und
das Sperrenrad (3) mit der drehweichen Hohlwelle (11) koaxial auf der Antriebswelle (5) des Getriebes (2) angeordnet ist und die Hohlwelle (11) drehfest mit einem auf der Antriebswelle (5) des Getriebes (2) angeordneten Antriebsritzel (6) einer ersten Stirnradstufe (9) verbunden ist, oder
- die Welle eine Zwischenwelle (10) des Getriebes (2) ist und das Sperrenrad (2) mit der drehweichen Hohlwelle (11) koaxial auf der Zwischenwelle (10) des Getriebes (2) angeordnet ist und die Hohlwelle (11) drehfest mit einem auf der Zwischenwelle (10) des Getriebes (2) angeordneten Stirnrad (8) einer ersten Stirnradstufe (9) des Getriebes (2) verbunden ist.

2. Kombination nach Anspruch 1, **dadurch gekennzeichnet, dass** die Welle des Getriebes (2) die Antriebswelle (5) des Getriebes (2) ist und die Hohlwelle (11) drehweich auf der Antriebswelle (5) gelagert ist.

3. Kombination nach Anspruch 1, **dadurch gekennzeichnet, dass** die Welle des Getriebes (2) die Zwischenwelle (10) des Getriebes (2) ist und die Hohlwelle (11) drehweich auf der Zwischenwelle (10) gelagert ist.

## Claims

1. Combination of a transmission (2) and a device for blocking the transmission (2) with at least one shaft and at least one locking wheel (3) coaxially arranged on the shaft, wherein the locking wheel (3) coaxially arranged on the shaft is connected by a rotationally flexible connection (4) to the shaft of the transmission to be blocked (2), **characterized in that** the rotationally flexible connection (4) between the locking wheel (3) and shaft is a hollow shaft (11), wherein either
- the shaft is a drive shaft (5) of the transmission (2), and
the locking wheel (3) is coaxially arranged by the rotationally flexible hollow shaft (11) on the drive shaft (5) of the transmission (2) and the hollow shaft (11) is rotationally fixedly connected to a drive pinion (6) of a first spur gear stage (9), the drive pinion being arranged on the drive shaft (5) of the transmission (2), or
- the shaft is an intermediate shaft (10) of the transmission (2) and the locking wheel (2) is coaxially arranged by the rotationally flexible hollow shaft (11) on the intermediate shaft (10) of the transmission (2) and the hollow shaft (11) is rotationally fixedly connected to a spur gear (8) of a first spur gear stage (9) of the transmission (2), the spur gear being arranged on the intermediate shaft (10) of the transmission (2).

2. Combination according to Claim 1, **characterized in that** the shaft of the transmission (2) is the drive shaft (5) of the transmission (2) and the hollow shaft (11) is rotationally flexibly mounted on the drive shaft (5).

3. Combination according to Claim 1, **characterized in that** the shaft of the transmission (2) is the intermediate shaft (10) of the transmission (2) and the hollow shaft (11) is rotationally flexibly mounted on the intermediate shaft (10).

## Revendications

1. Combinaison d'une transmission (2) et d'un dispositif de blocage de la transmission (2) avec au moins un arbre et au moins une roue de blocage (3) agencée coaxialement sur l'arbre, la roue de blocage (3) agencée coaxialement sur l'arbre étant reliée à l'arbre de la transmission (2) à bloquer par une liaison souple en torsion (4), **caractérisée en ce que** la liaison souple en torsion (4) entre la roue de blocage (3) et l'arbre est un arbre creux (11), et, soit
- l'arbre est un arbre d'entraînement (5) de la transmission (2) et
la roue de blocage (3) est agencée coaxialement sur l'arbre d'entraînement (5) de la transmission (2) avec l'arbre creux (11) souple en torsion et l'arbre creux (11) est relié de manière solidaire en rotation à un pignon d'entraînement (6) d'un premier étage d'engrenage droit (9) agencé sur l'arbre d'entraînement (5) de la transmission (2), soit
- l'arbre est un arbre intermédiaire (10) de la transmission (2) et la roue de blocage (2) est agencée avec l'arbre creux (11) de façon souple en torsion coaxialement sur l'arbre intermédiaire (10) de la transmission (2) et l'arbre creux (11) est relié de manière solidaire en rotation à un pignon droit (8) d'un premier étage d'engrenage droit (9) de la transmission (2), agencée sur l'arbre intermédiaire (10) de la transmission (2).

2. Combinaison selon la revendication 1, **caractérisée en ce que** l'arbre de la transmission (2) est l'arbre d'entraînement (5) de la transmission (2), et l'arbre creux (11) est monté de manière souple en torsion sur l'arbre d'entraînement (5).

3. Combinaison selon la revendication 1, **caractérisée en ce que** l'arbre de la transmission (2) est l'arbre intermédiaire (10) de la transmission (2), et l'arbre creux (11) est monté de manière souple en torsion sur l'arbre intermédiaire (10).
